# EUROPEAN PATENT APPLICATION

(11) **EP 1 739 706 A1**
(43) Date of publication of application: **03.01.2007**
(21) Application number: 05721570.9
(22) Date of filing: 22.03.2005
(51) Int. Cl.: H01J 1/312, H01J 9/02, H01J 31/12

(54) **ELECTRON EMITTING DEVICE AND MANUFACTURING METHOD THEREOF AND IMAGE PICK UP DEVICE OR DISPLAY DEVICE USING ELECTRON EMITTING DEVICE**

(30) Priority: 30.03.2004 JP 2004097469
(71) Applicant: Pioneer Corporation, Tokyo 153-8654 (JP); Pioneer Micro Technology Corp., Yamanashi 400053 (JP)
(72) Inventor: SAKEMURA, Kazuto c/o Corporate Res. & Dev. Lab., Tsurugashima-shi Saitama 3502288 (JP); ASO, Saburo, Kofu-shi, Yamanashi 4000053 (JP); HANIHARA, Koji, Kofu-shi, Yamanashi 4000053 (JP); NEGISHI, Nobuyasu c/o Corporate Res. & Dev. Lab., Tsurugashima-shi Saitama 3502288 (JP); NAKADA, Tomonari c/o Corporate Res. & Dev. Lab., Tsurugashima-shi, Saitama 3502288 (JP); YOSHIKAWA, Takamasa c/o Corporate Res. & Dev. Lab., Tsurugashima-shi, Saitama 3502288 (JP)
(74) Representative: Neugebauer, Jürgen
(86) International application number: PCT/JP2005/005643
(87) International publication number: WO 2005/096335

(57) **Abstract**

An electron emitting device having a lower electrode on a side near to a substrate and an upper electrode on a side remote from the substrate respectively, formed of a plurality of electron emitting elements remitting electrons from a side of the upper electrode side, wherein space is formed between the electron emitting elements, and the upper electrode extends across the plurality of electron emitting elements and the space by a bridging portion of the upper electrode.

## Description

### TECHNICAL FIELD

The present invention relates to electron emitting elements as electron sources and also imaging devices, display devices, and other electronic devices using the electron emitting elements, and more particularly to a wiring structure for electronic devices having a plurality of electron emitting elements arranged in an array.

### BACKGROUND ART

Conventionally there is known an electron emitting element as electron sources having a structure type of metal - insulation - semiconductor (MIS), metal - insulation - metal (MIM), or etc.

For example, an electron emitting element having the MIM structure could have a lower electrode, an insulator layer, and an upper electrode deposited in that order on a substrate. The electron emitting element is arranged below and in opposition to an electrode in a vacuum, and when a predetermined voltage is applied between the lower and upper electrodes, some of the electrons are emitted from the upper electrode into the vacuum.

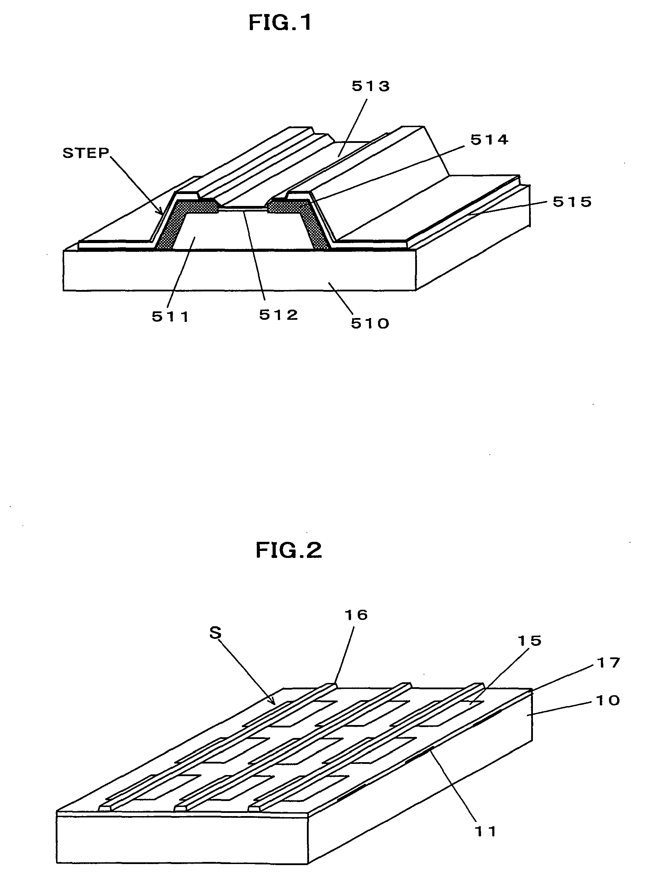

There has been proposed as an electron emitting element of an MIM structure as shown in Fig. 1, in which an electron emitting section, that includes a protective insulating layer 514 formed around and covering a tunnel insulator layer 512 (the film thickness of the protective insulator layer 514 is greater than that of the tunnel insulator layer) on a lower electrode 511, is formed on a substrate 510, and a bus line 515 is formed connected to an upper electrode 513 on the protective insulator layer 514 (see Japanese Patent Application Laid-open No. H11-120898) .

The thickness of the upper electrode 513 is between several nanometers and several tens of nanometers. The bus line 515 is formed over the step portion formed by the laminated lower electrode 511, the tunnel insulator layer 512, and the protective insulator layer 514. Therefore, disconnection of the bus line 515 at the step portion is a problem. Also, the film thickness of the upper electrode at the step portion can become non-uniformly thin, causing non-uniform electric fields due to the increase in resistance, which could cause failure to occur in the upper electrode.

There are known as a method of solving the bus line disconnection problem at the step portion in which electron emitting elements arranged in a matrix structure are used in display devices (see Japanese Patent Application Laid-open No. H11-185675) . In this technology, as shown in Fig. 2, an insulation support portion 17 is provided in the intervals between electron emitting elements S aligned on a lower electrode 11 on a substrate 10, and above the insulation support portion 17 a bus electrode 16 is provided connected to a metal thin film electrode 15. In this technology, if insulation material is provided in the depression portion between electron emitting elements S to provide the insulation support portion 17, the method of providing stable insulation becomes a problem.

### DISCLOSURE OF THE INVENTION

Therefore, an example of the problem that the present invention aims to solve is to provide a wiring structure for electron emitting devices, imaging devices, display devices, or other devices using the electron emitting devices, or devices in which a plurality of electron emitting elements are arranged in a matrix structure for example, in which there are no problems of disconnection between elements, and electrons can be stably discharged.

An electron emitting device according to the present invention includes a lower electrode on a side near to a substrate and an upper electrode on a side remote from the substrate respectively, formed of a plurality of electron emitting elements emitting electrons from a side of the upper electrode, wherein space is formed between the electron emitting elements, and the upper electrode is extended across the plurality of electron emitting elements and the space by bridging portions of the upper electrode.

A method of manufacturing an electron emitting device according to the present invention having a lower electrode on a side near to a substrate and an upper electrode on a side remote from the substrate respectively, formed of a plurality of electron emitting elements emitting electrons from a side of the upper electrode, with space being formed between the electron emitting elements, and the upper electrode being extending across the plurality of electron emitting elements and the space by bridging portions of the upper electrode, the method comprising: an electron emitting section forming step of forming a laminated body on which an upper electrode material layer is deposited to form a plurality of electron emitting elements on a substrate; a bridge forming step of forming a plurality of bridge portions provided with at least one through hole or notch along a line that separates the plurality of electron emitting elements by etching the upper electrode material layer; a cutting step of etching part of the exposed insulator layer to or near to the substrate and lower electrode by anisotropic etching using the bridge portions as a mask; and a separating step of separating the exposed part of the insulator layer into the plurality of electron emitting elements by isotropic etching to enlarge the space using the bridge portions as a mask.

An imaging element according to the present invention includes: an electron emitting device according to any of claims 1 to 16; a photoelectric conversion film approximately parallel to and in opposition to the upper electrode and enclosing a vacuum space; an optically transparent electrically conducting film deposited on the photoelectric conversion film; and an optically transparent front substrate that supports the photoelectric conversion film and the optically transparent electrically conducting film.

A display device according to the present invention includes: an electron emitting device according to any of claims 1 to 16; and an optically transparent front substrate in opposition to the upper electrode and enclosing a vacuum space, with a fluorescent layer arranged on the surface on the side of the vacuum space, and a collector electrode formed on the fluorescent layer and in opposition to the upper electrode.

### BRIEF DESCRIPTION OF THE DRAWINGS

Fig. 1 and Fig. 2 are isometric views of schematic enlarged portions of a conventional electron emitting element.
Fig. 3 is a cross-section through an enlarged portion of an electron emitting device according to an embodiment of the present invention.
Fig. 4 is an isometric view of an enlarged portion of an electron emitting device according to an embodiment of the present invention.
Fig. 5 is an isometric cross-section of an enlarged portion along the line A-A in Fig. 4.
Figs. 6 to 17 are isometric views of an enlarged portion of an element substrate in the manufacturing process for an electron emitting device according to an embodiment of the present invention.
Fig. 18 is a cross-section of an enlarged portion of an element substrate in the manufacturing process for an electron emitting device according to an embodiment of the present invention.
Fig. 19 is a graph showing the current voltage characteristics for an element with a separated electron supply layer and an element with an unseparated electron supply layer according to an embodiment of the present invention.
Fig. 20 is a plan view of an enlarged portion of the upper electrode in an electron emitting element according to another embodiment of the present invention.
Fig. 21 and Fig. 22 are isometric views of an enlarged portion of an element substrate in the manufacturing method for an electron emitting element according to another embodiment of the present invention.
Fig. 23 and Fig. 24 are plan views of an enlarged portion of the upper electrode in an electron emitting element according to another embodiment of the present invention.
Fig. 25 is a cross-section of an enlarged portion of an electron emitting element in an electron emitting device according to an embodiment of the present invention.
Fig. 26 is an exploded isometric view of an enlarged portion of an imaging element using an electron emitting element according to an embodiment of the present invention.
Fig. 27 is an exploded isometric view of an enlarged portion of a panel of a flat panel display device that applies the electron emitting element according to another embodiment of the present invention.

### MODE FOR CARRYING OUT THE INVENTION

The following is an explanation of embodiments of the present invention with reference to the drawings.

### (Electron Emission Device)

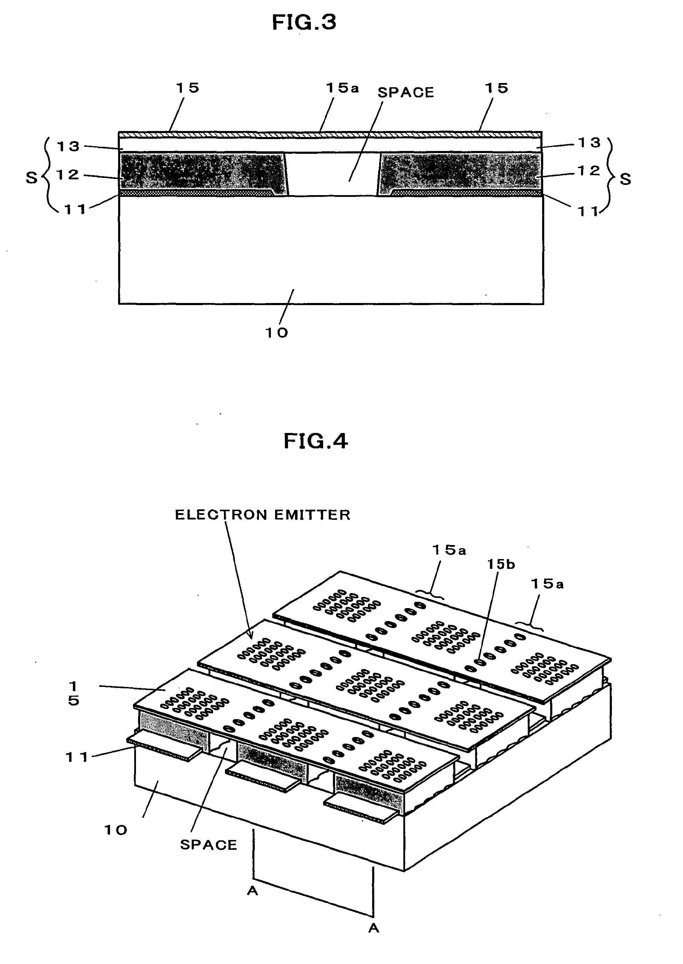

Fig. 3 shows a schematic cross-section view of one example of electron emitting device. The electron emitting device includes a plurality of electron emitting elements S formed on a substrate 10, each electron emitting element S includes an electron supply layer 12, an insulator layer 13, and an upper electrode 15 formed in that order on top of a lower electrode 11 which is on the side close to the substrate 10. In the electron emitting element, when a predetermined voltage is applied between the lower electrode and the upper electrode, electrons are discharged from the upper electrode side. A bridge portion 15a formed integrally from the same material as the upper electrode 15 on the side away from the substrate is installed above a space that exists between electron emitting elements is provided extending approximately parallel to the substrate. In other words, the upper electrode 15 stretches across several electron emitting elements S and crosses over the space between elements by the bridge portion 15a. The bridge portion 15a is electrically connected to the upper electrodes 15 of adjacent electron emitting elements S without touching the side surfaces of the electron emitting elements S or the substrate. The current path is shortened and the possibility of a disconnection is reduced by the bridge portions 15a provided above the space. In the example shown in Fig. 3, the bridge portion 15a is formed by a lamination of the insulator layer 13 and the upper electrode 15. The insulator layer has the effect of reinforcing the upper electrode. Provided the upper electrode 15 can maintain its strength the insulator layer 13 may be omitted. Furthermore, the upper electrode 15 may have a multi-layered structure.

As shown in Fig. 4, the plurality of electron emitting elements may be arranged in for example a matrix structure in the electron emitting device. In other words, the upper electrodes 15 connected by the bridge portions 15a and the lower electrodes 11 are stripe-shaped electrodes, and they are arranged at the positions where they mutually intersect. Electron emission elements S are arranged at the positions of intersection of the stripes. As shown in Fig. 4, a plurality of through holes 15b is provided in the bridge portions 15a above the space. Provided the bridge portion 15a has the strength necessary to support its own shape and the necessary resistance is maintained, there may be a minimum of one through hole 15b.

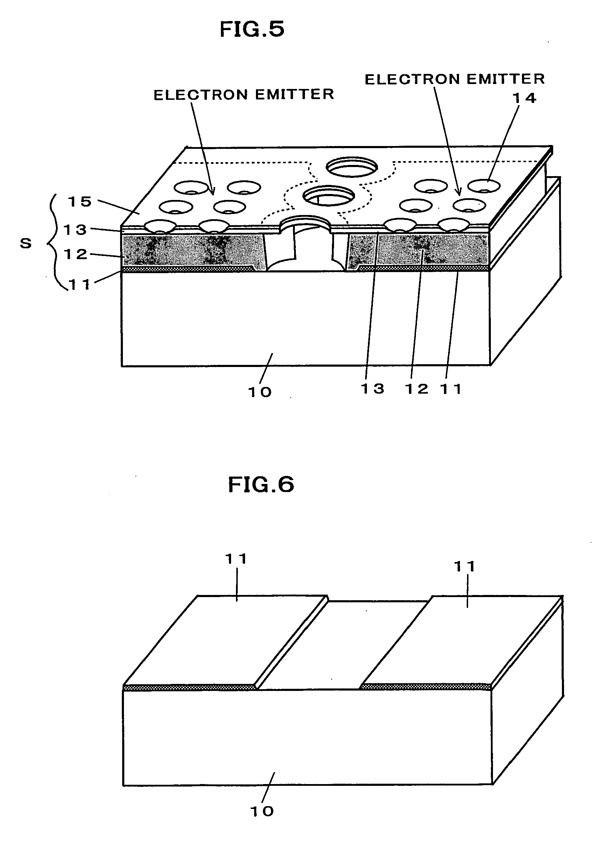

As shown in Fig. 5, each electron emitting element S includes a plurality of island areas 14 in which the film thickness of the insulator layer 13 and the upper electrode 15 gradually decrease towards the electron supply layer 12. Each electron emitting element S may have a minimum of one island area 14 . In the island area 14 the film thickness of the insulator layer 13 and the upper electrode 15 gradually decreases towards the center of the island area 14. In this way, the island areas 14 are formed as for example depressions on the flat surface of the upper electrode 15. In the island areas 14, the upper electrode 15 terminates on the edge of the insulator layer 13. Also, in the island areas 14, the insulator layer 13 terminates on the edge of the electron supply layer 12. Therefore, short circuiting does not occur between the upper electrode 15 and the electron supply layer 12.

The electron emitting element S is an example of an embodiment of a laminated structure with the lower electrode 11, the electron supply layer 12, the insulator layer 13, and the upper electrode 15 laminated in that order on the element substrate 10. Besides glass, the material of the element substrate 10 may be Al₂O₃, Si₃N₄, BN, or another ceramic. A wafer in which SiO₂ or another insulation film covers a Si wafer may also be used as the substrate.

The lower electrode 11 may be a single layer or laminated, made from for example aluminum (Al), tungsten (W), titanium nitride (TiN), copper (Cu), chromium (Cr) or similar.

The electron supply layer 12 is made from silicon (Si), or a mixture consisting mainly of Si or its compounds, or an amorphous phase semiconductor, or similar. Amorphous silicon (a-Si) doped with group IIIb or group Vb elements formed into a film by the sputtering method or CVD method is particularly effective as the material of the electron supply layer 12, besides compound semiconductors such as hydrogenated amorphous silicon (a-Si:H) in which the dangling bonds of a-Si are terminated with hydrogen (H), or hydrogenated amorphous silicon carbide (a-SiC:H) in which part of the silicon is replaced with carbon (C), or hydrogenated amorphous silicon nitride (a-SiN:H) in which part of the silicon is replaced with nitrogen (N) may also be used.

Oxides of silicon SiOₓ (where subscript x denotes the atomic ratio) are particularly effective as the dielectric material of the insulating layer 13, besides,
LiOₓ, LiNₓ, NaOₓ, KOₓ, RbOₓ, CsOₓ, BeOₓ, MgOₓ, MgNₓ, CaOₓ, CaNₓ, SrOx, BaOₓ, ScOₓ, YOₓ, YNₓ, LaOₓ, LaNₓ, CeOₓ, PrOₓ, NdOₓ, SmOₓ, EuOₓ, GdOₓ, TbOₓ, DyOₓ, HoOₓ, ErOₓ, TmOₓ, YbOₓ, LuOₓ, TiOₓ, ZrOₓ, ZrNₓ, HfOₓ, HfNₓ, ThOₓ, VOₓ, VNₓ, NbOₓ, NbNₓ, TaOₓ, TaNₓ, CrOₓ, CrNₓ, MoOₓ, MoNₓ, WOₓ, WNₓ, MnOₓ, ReOₓ, FeOₓ, FeNₓ, RuOₓ, OsOₓ, CoOₓ, RhOₓ, IrOₓ, NiOₓ, PdOₓ, PtOₓ, CuOₓ, CuNₓ, AgOₓ, AuOₓ, ZnOₓ, CdOₓ, HgOₓ, BOₓ, BNₓ, AlOₓ, AlNₓ, GaOₓ, GaNₓ, InOₓ, SiNₓ, GeOₓ, SnOₓ, PbOₓ, POₓ, PNₓ, AsOₓ, SbOₓ, SeOₓ, TeOₓ, or other oxides or nitrides may be used.

Also, LiAlO₂, Li₂SiO₃, Li₂TiO₃, Na₂Al₂₂O₃₄, NaFeO₂, Na₄SiO₄, K₂SiO₃, K₂TiO₃, K₂WO₄, Rb₂CrO₄, CS₂CrO₄, MgAl₂O₄, MgFe₂O₄, MgTiO₃, CaTiO₃, CaWO₄, CaZrO₃, SrFe₁₂O₁₉, SrTiO₃, SrZrO₃, BaAl₂O₄, BaFe₁₂O₁₉, BaTiO₃, Y₃Al₅O₁₂, Y₃Fe₅O₁₂, LaFeO₃, La₃Fe₅O₁₂, La₂Ti₂O₇, CeSnO₄, CeTiO₄, Sm₃Fe₅O₁₂, EuFeO₃, Eu₃Fe₅O₁₂, GdFeO₃, Gd₃Fe₅O₁₂, DyFeO₃, Dy₃Fe₅O₁₂, HoFeO₃, Ho₃Fe₅O₁₂, ErFeO₃, Er₃Fe₅O₁₂, Tm₃Fe₅O₁₂, LuFeO₃, Lu₃Fe₅O₁₂, NiTiO₃, Al₂TiO₃, FeTiO₃, BaZrO₃, LiZrO₃ , MgZrO₃, HfTiO₄, NH₄VO₃, AgVO₃, LiVO₃, BaNb₂O₆, NaNbO₃, SrNb₂O₆, KTaO₃, NaTaO₃, SrTa₂O₆, CuCr₂O₄, Ag₂CrO₄, BaCrO₄, K₂MoO₄, Na₂MoO₄, NiMoO₄, BaWO₄, Na₂WO₄, SrWO₄, MnCr₂O₄, MnFe₂O₄, MnTiO₃, MnWO₄, CoFe₂O₄, ZnFe₂O₄ , FeWO₄, CoMoO₄, CoTiO₃, CoWO₄, NiFe₂O₄, NiWO₄, CuFe₂O₄, CuMoO₄, CuTiO₃ , CuWO₄, Ag₂MoO₄, Ag₂WO₄, ZnAl₂O₄, ZnMoO₄, ZnWO₄, CdSnO₃, CdTiO₃, CdMoO₄, CdWO₄, NaAlO₂, MgAl₂O₄, SrAl₂O₄, Gd₃Ga₅O₁₂, InFeO₃, MgIn₂O₄, Al₂TiO₅, FeTiO₃, MgTiO₃, Na₂SiO₃, CaSiO₃, ZrSiO₄, K₂GeO₃, Li₂GeO₃, Na₂GeO₃, Bi₂Sn₃O₉, MgSnO₃, SrSnO₃, PbSiO₃, PbMoO₄, PbTiO₃, SnO₂-Sb₂O₃, CuSeO₄, Na₂SeO₃, ZnSeO₃, K₂TeO₃, K₂TeO₄, Na₂TeO₃, Na₂TeO₄, and other complex oxides,
FeS, Al₂S₃, MgS, ZnS, and other sulfides,
LiF, MgF₂, SmF₃, and other fluorides,
HgCl, FeCl₂, CrCl₃, and other chlorides,
AgBr, CuBr, MnBr₂, and other bromides,
PbI₂, CuI, FeI₂, and other iodides,
LaB₆, CeB₆, and other lanthanoid boron compounds,
TiB₂, ZrB₂, HfB₂, and other metal borides,
or SiAlON and other oxynitrides are effective as the dielectric material of the insulator layer 13.

Also, carbon insulators made from diamond or fullerenes (C₂ₙ) are effective. It is desirable that the thickness of the flat portion of the insulator layer apart from the island areas 14 be 50 nm or greater, besides it is preferable that the range of thickness be determined from the capacitance of the element, the size of the main mask, and the strength of the bridge portion.

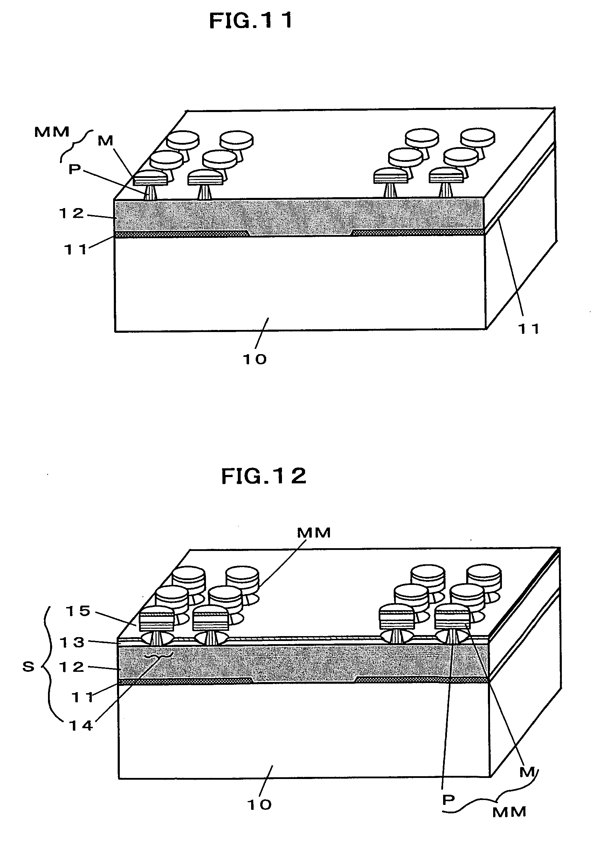

The insulator layer sandwiched between the upper electrode and the electron supply layer forms a capacitor in the flat part of an element. If the value of this capacitor is large it will hinder the high speed operation of the element, and this is particularly the case when combined with a photoelectric conversion film to form an imaging device. From this point of view a thicker insulator layer is preferable. On the other hand, to increase the amount of electron emitting (emission current) of the element, increasing the surface density of electron emitting sections (the number of electron emitting sections per unit area) is effective, but increasing the thickness of the insulator layer is an obstacle to increasing the surface density. This is because when forming the electron emitting sections (known as island areas) 14, a plurality of micro masks MM including support portions P and main masks M are used as masks, as shown in Fig. 11. If the insulator layer is thick it becomes necessary to make the support portions P higher, and as a result the diameter of the main mask M must be made larger, and it becomes impossible to obtain the surface density. Also, in order to obtain the strength required to support the shape of the bridge portions that covers the space between adjoining electron emitting elements, the greater the thickness of the film of the insulator layer the better. The desirable thickness of the insulator layer determined in this way is around 100 - 1000 nm.

Tungsten (W) with an extremely high melting point is particularly effective as the material for forming the thin film of the upper electrode 15 , besides high melting point molybdenum (Mo), rhenium (Re), tantalum (Ta), osmium (Os), iridium (Ir), ruthenium (Ru), rhodium (Rh), vanadium (V), chromium (Cr), zirconium (Zr), platinum (Pt), titanium (Ti), palladium (Pd), iron (Fe), yttrium (Y), cobalt (Co), and nickel (Ni) are also effective, and Au, Be, B, C, Al, Si, Sc, Mn, Cu, Zn, Ga, Nb, Tc, Ag, Cd, In, Sn, Tl, Pb, La, Ce, Pr, Nd, Pm, Sm, Eu, Gd, Tb, Dy, Ho, Er, Tm, Yb, Lu, and others may also be used. Also, alloys of these metals or electrically conducting compounds such as LaB₆ , CeB₆, TiB₂, ZrB₂, HfB₂ may be used. It is desirable that the film thickness of the flat part of the upper electrode 15 apart from the electron emitting sections be 10 nm or greater, besides a more desirable range of thickness is determined from the resistance of the upper electrode, the size of the main mask, and whether a bus electrode has been added or not.

In the flat part of the element, the upper electrode performs the role of conductor. Therefore, it is desirable that the resistance of the upper electrode is small, in other words, a thick film is desirable. On the other hand, to increase the electron emitting (emission current) of the element, it is effective to increase the surface density of electron emitting sections (number of electron emitting sections per unit area), but increasing the thickness of the upper electrode makes it difficult to increase the surface density. This is because when forming the electron emitting sections (known as island areas) 14, a plurality of micro masks MM including support portions P and main masks M are used as masks, as shown in Fig. 11. If the upper electrode is thick it becomes necessary to make the support portions P higher, and as a result the diameter of the main mask M must be made larger, and it becomes impossible to obtain the surface density. Also, as a method of reducing the resistance of the flat portion of the element corresponding to the upper electrode while leaving the film thickness of the upper electrode small, introducing a bus electrode to the flat portion only excluding the electron emitting sections is effective. If this method is used, the film thickness of the flat portion of the upper electrode can also be made thinner. A suitable thickness of the upper electrode determined in this way is 5 - 1000 nm.

Methods for forming the films in the manufacture of the electron emitting element include the physical deposition method and the chemical deposition method. The physical deposition method is known as the Physical Vapor Deposition (PVD) method, which includes the vacuum vapor deposition method, the molecular beam epitaxy method, the sputtering method, the ionization vapor deposition method, the laser abrasion method, and the like. The chemical deposition method is known as the Chemical Vapor Deposition (CVD) method, which includes the thermal CVD method, the plasma CVD method, the metal-organic chemical vapor deposition (MOCVD) method, and the like. Among these the sputtering method is particularly effective. To form the electron supply layer using the sputtering method (including the reactive sputtering method), the sputtering conditions for forming the film are: gas pressure 0.1 - 100 mTorr or preferably 0.1 - 20 mTorr, and film deposition rate 0.1 - 1000 nm/min or preferably 0.5 - 100 nm/min.

Furthermore, a carbon area (not shown on the drawings) comprising carbon or a mixture of which carbon is a component or a carbon compound may be formed at least in the depressions of the island portions 14 in the upper part of the electron emitting element S. Also, during manufacture part of the electron supply layer 12 may be crystallized from the non-crystalline phase by using the Joule heating that is generated by an electricity conduction process by applying a predetermined voltage between the upper and lower electrodes.

As the material for the carbon area, amorphous carbon, graphite, carbin, fullerenes (C₂ₙ), diamond- like carbon, carbon nanotubes, carbon nanofibers, carbon nanohorn, carbon nanocoil, carbon nanoplate, diamond, and other forms of carbon, or carbon compounds such as ZrC, SiC, WC, or MoC are effective.

To form the carbon area as a thin film, it is possible to deposit the film uniformly over the depressions of the island areas and the upper electrode using a sputtering device with a carbon target provided in a vacuum chamber for example. In this case, the form of carbon is mainly amorphous carbon, graphite, or diamond-like carbon. On the other hand, when the carbon in the carbon area is in the form of carbon nanotubes, carbon nanofibers, carbon nanohorn, carbon nanocoil, or carbon nanoplate, the CVD method is effective. In this case, a catalyst layer whose main components are Fe, Ni, or Co may be provided as a surface layer on the upper electrode. Also, a printing method is effective as the method of forming the carbon area regardless of the form of carbon.

### (Method of manufacturing the electron emitting device)

The following is a schematic explanation of one example of a method of manufacturing the electron emitting device shown in Fig. 4 with electron emitting elements arranged in a matrix shape. (Process of forming electron emitting sections including a plurality of electron emitting elements on a substrate)

First, a laminated body forming a plurality of electron emitting elements is formed on a substrate, then island areas are formed as the electron emitting sections.

As shown in Fig. 6, a clean substrate 10 is prepared, and on the main surface the lower electrode 11 is formed in stripe shape comprising for example the four layers Cr/Cu/Cr/Ti.

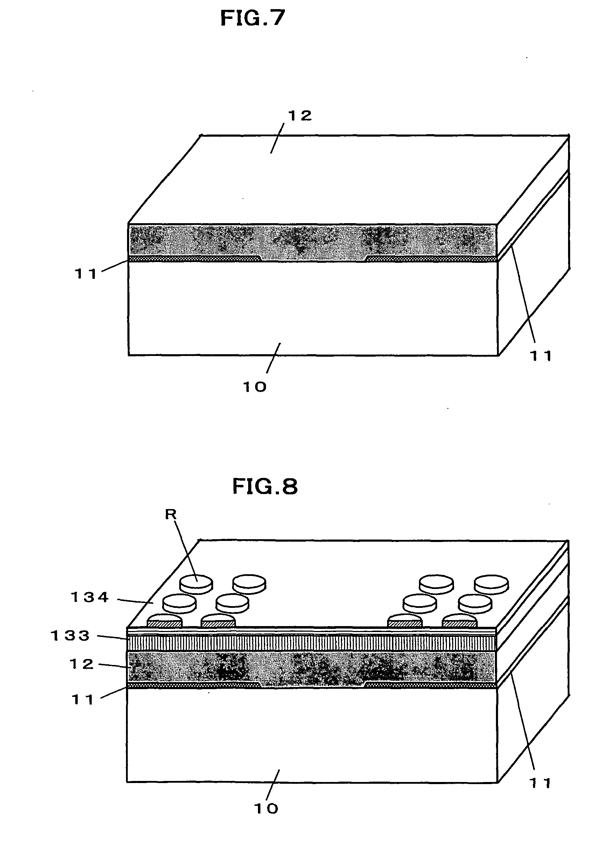

Next, as shown in Fig. 7, the electron supply layer 12 is formed from Si for example on the substrate 10 and the lower electrodes 11 by sputtering, covering the stripe shaped lower electrodes. Besides silicon, an electron supply layer made from a mixture or compound with silicon as the main component may be formed on the substrate.

Next, a plurality of masks are formed on the electron supply layer so as to form a canopy around each part that is in contact with the electron supply layer. Micromasks having an umbrella structure are used as the masks using the difference in etching rates of the laminated body. The micro mask includes an upper main mask having a predetermined area and a support portion that supports the main mask and has a cross-sectional area smaller than the predetermined area.

The method of forming the micro mask is as follows.

As shown in Fig. 8, a support portion material layer 133 is formed from the material of the support portion of the micro mask, for example silicon nitride SiOₓ, on the electron supply layer 12 by CVD or the like, and above this a main mask material layer 134 is formed from the material of the main mask of the micro mask, for example SiOₓ.

Then, as shown in Fig. 8, a resist mask R is formed over the main mask material layer 134. In other words, patterning is carried out by applying a resist, and developing by exposing to light in a specific pattern. This process is similar to the normal photolithography method of applying a resist, exposing to light, and developing. Also, if the electron beam lithography method is used, more refined patterning can be carried out. The resist masks R are arranged above the lower electrode 11 in an area that will intersect with the stripes of the upper electrodes formed later. Besides a circular shape, the resist mask R corresponding to the main mask may be a polygonal shape or a shape formed of curves and straight lines.

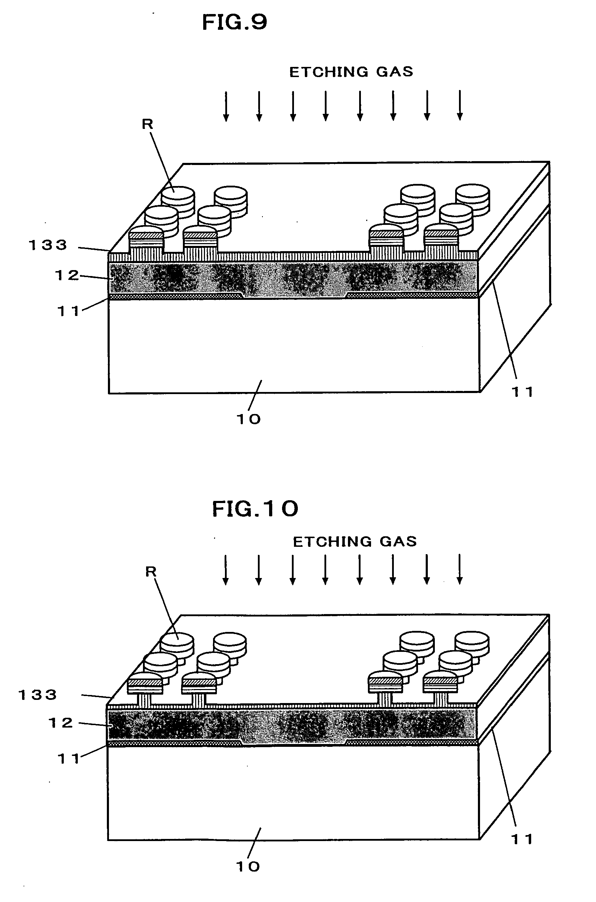

Then as shown in Fig. 9, an anisotropic etching such as reactive ion etching or similar is carried out. The area where the resist mask R remains is protected from the etching gas, and the main mask material layer 134 is etched in a direction perpendicular to the surface of the film only in the area where the resist mask R does not remain. This dry etching is carried out to part way through the support portion material layer 133.

Next, wet etching with warm phosphoric acid solvent (isotropic etching) is carried out as shown in Fig. 10. Here the etching ratio of silicon oxide and silicon nitride is 1:50, so silicon oxide is virtually unetched. As shown in Fig. 10, the support portion material layer 133 is thinned in the horizontal direction below the surface of the main mask material layer 134 by the isotropic etching. Then, the electron supply layer 12 is exposed, and the wet etching is stopped when the shape of the remaining support portion material layer 133 (support portions) is appropriately formed.

Next, the resist mask R remaining above the main mask area is removed by ashing, and a plurality of micro masks MM including silicon nitride support portions P and silicon oxide main masks M are formed in the locations corresponding to where the island areas are to be formed above the electron supply layer 12, as shown in Fig. 11.

In this way, in the process of forming the masks, the support portion material layer and the main mask material support layer are formed on the electron supply layer 12 of the substrate, and resist masks are formed above the main mask material layer 134 by the photolithography method, then using the dry etching method and the wet etching method the micro masks MM are formed by etching the main masks and the support portions in that order. As masks the micro masks MM include support portions (overhang portions) that project in a direction normal to the substrate and the electron supply layer, and main masks that project from the support portions in a direction parallel to the substrate and the electron supply layer. The material of the support portion material layer of the micro masks MM is not limited to materials that can be wet etched. In addition, there is selected at least a material for which isotropic etching is possible. Also, the micro masks MM as electrically insulating masks can be left and not removed, to give electron emitting devices having micro masks MM in the final product.

Then, as shown in Fig. 12, silicon oxide SiOₓ is uniformly deposited over the electron supply layer 12 and the micro masks MM by sputtering, to form the insulator layer 13 comprising a thin film of insulator. Here, around the part where the electron supply layer 12 is in contact with the micro masks MM the insulator gas (particles) penetrates inwards, and part of the insulator layer is formed with a film thickness gradually decreasing from the predetermined film thickness of the insulator layer 13. The part of the insulator layer in which the film thickness gradually decreases terminates and forms an edge (film thickness in the order of angstroms) on the electron supply layer 12 beneath the main mask M.

Next, as shown in Fig. 12, the upper electrode 15 is formed by uniformly depositing tungsten (W) on the insulator layer 13 and the micro masks MM by sputtering. Here, the metal penetrates from the interval between the insulator layer 13 and the main mask M to around the part in contact with the support portion P, and part of the upper electrode is formed with a film thickness reducing gradually from the predetermined film thickness of the upper electrode 15. The part of the upper electrode in which the film thickness gradually decreases terminates and forms an edge (film thickness in the order of angstroms) on the insulator layer 13 beneath the main mask M. In this way, the film thickness of the insulator layer 13 and the upper electrode 15 continuously decreases in the direction of the center of the support portions P of the micro masks MM. As a result, the depressions of the island areas 14 are formed around the contact surfaces below the micro masks MM within the insulator layer 13 and the upper electrode 15. Here the film thicknesses of the main mask material layer 134 and the support portion material layer 133 are set so that each main mask M of the micro mask MM is exposed from each depression, in other words, the main mask is not completely covered by the deposit material of the upper electrode 15.

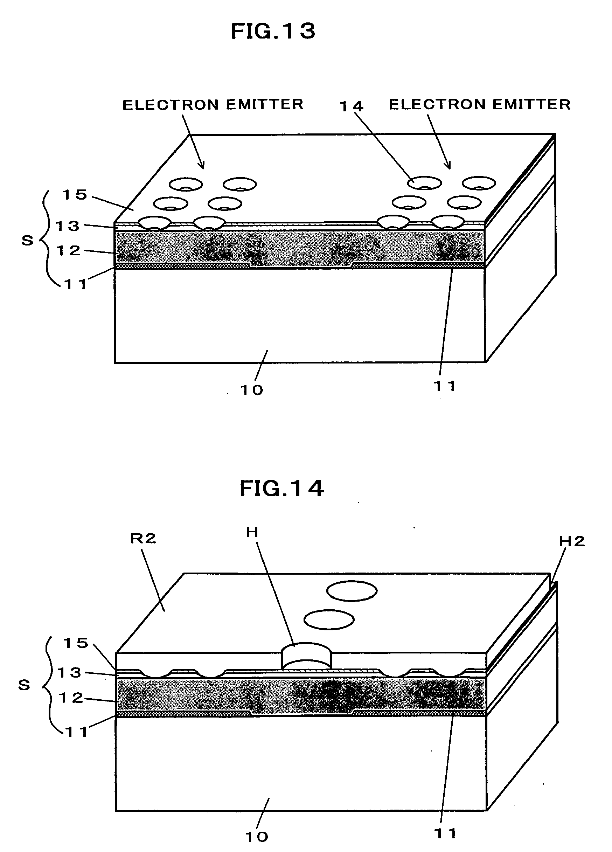

Next, wet etching is carried out with a warm phosphoric acid solvent, to remove the micro masks including the silicon nitride support portions. As shown in Fig. 13, a plurality of island areas 14 that form the electron emitting sections appear as depressions.

In the method of forming the island area electron emitting sections, the area and thickness of the main masks M and the support portions P of the micro masks MM are determined by patterning, so control of forming is easy. The support portions P in the shape of the leg of a goblet do not overturn, so they have excellent stability. Furthermore, the thickness of the support portions P is easily controlled by the film thickness of the material, the area of the main mask M, and the etching time.

### (Process of forming the bridge portion)

Next, to separate the laminations on which the island areas have been formed into a plurality of electron emitting elements, a plurality of bridge portions provided with at least one through hole or notch is formed from the upper electrode material layer on the laminations.

As shown in Fig. 14, the resist is uniformly applied above the upper electrode 15 in which island areas are formed. Furthermore, in the resist film a plurality of openings H are formed in lines in a direction parallel to the direction of extension of the lower electrode 11 at a fixed interval in the portion between electron emitting elements (the separation lines), and at the same time, a slit opening H2 is formed so as to intersect the direction of extension of the lower electrode 11 at right angles, to form the second resist mask R2. The upper electrode 15 is exposed by the openings H and the slit H2.

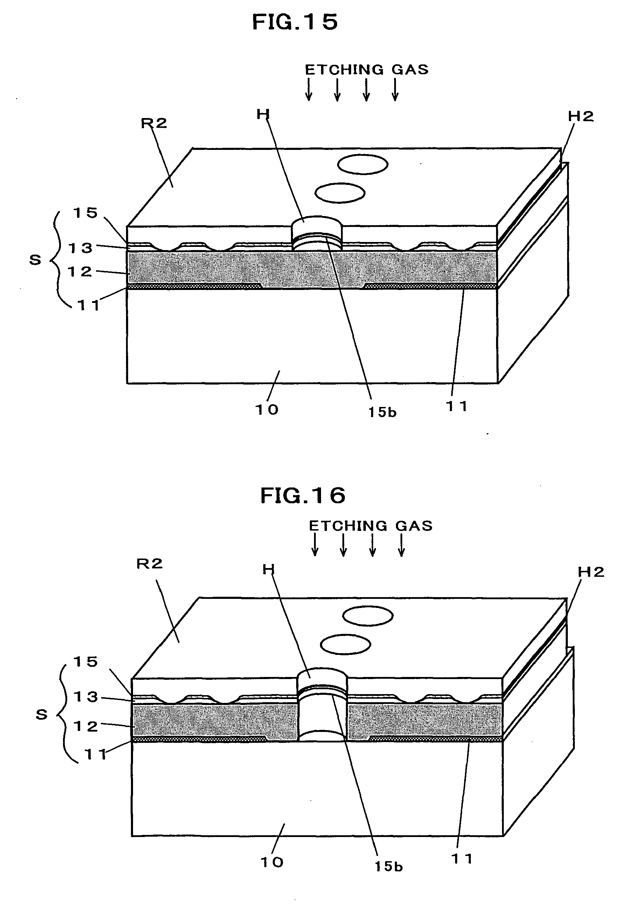

Next, as shown in Fig. 15 , isotropic etching is carried out on the upper electrode 15 and the insulator layer 13 below the openings H and the slits H2 of the second resist R2 by plasma etching, and the electron supply layer 12 is exposed. In this way, the through holes 15b are formed, and the bridge portion is formed as a mask.

Next, as shown in Fig. 16, anisotropic etching is carried out by reactive ion etching on the Si electron supply layer 12 below the openings, and the substrate 10 and the lower electrode 11 is exposed.

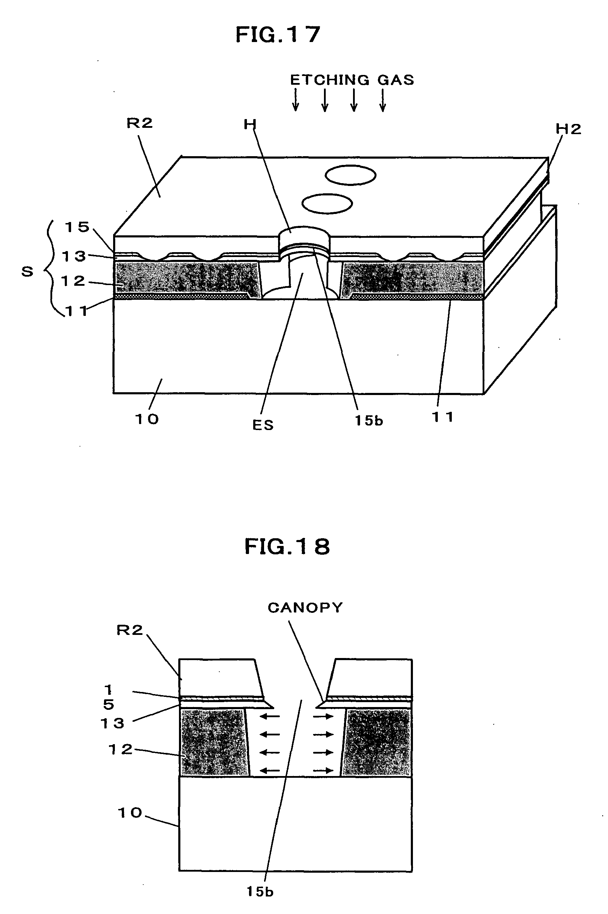

Next, as shown in Fig. 17, isotropic etching is carried out by chemical dry etching, to increase the diameter of the openings in the electron supply layer 12 directly beneath the upper electrode 15 and the insulator layer 13. The enlarged opening spaces ES in the electron supply layer 12 are etched so that they join to adjacent enlarged opening spaces ES (corresponding to openings H and slits H2).

Then the second resist mask R2 applied to the upper electrode and insulator layer is removed. Then a carbon thin film may be formed on the island areas 14 and the upper electrode 15 as a carbon area, which is not shown in the drawings. In this way the electron emitting device shown in Fig. 5 is formed.

In this way, in the method of deep etching the electron supply layer of the present embodiment, through holes are provided in the insulator layer and the upper electrode from among the electron supply layer, the insulator layer, and the upper electrode that are formed as films over a wide area, and from the through holes anisotropic and isotropic etching is carried out in that order. At this time, it is possible to separate the electron supply layers without isotropic etching. It should be noted, if only anisotropic etching is carried out, the separated electron supply layers will project into the enlarged opening space ES, and there is a big likelihood that the subsequently formed carbon layer will cross over to the insulator layer via the through holes, and the upper electrode and the electron supply layer will become conducting. Therefore, as shown in Fig. 18, by the isotropic etching process shown in Fig. 15 the structure of a canopy portion extending towards the center of the through hole 15b remains in the insulator layer, so conduction between the upper electrode and the electron supply layer that could occur due to adherence of a carbon particle when subsequently forming the film of the carbon layer is prevented. It is possible to prevent conduction by the insulator layer of the bridge portion only, resultingly by this method it is even more effective.

Also, so that leakage current due to the conductivity of Si does not occur when electric power to elements is turned on, it is necessary that the electron supply layer is continuously separated in the direction that the electron supply layer crosses the upper electrode. Therefore, in providing through holes in the upper electrode, the upper electrode must not be disconnected and the electron supply layer must be continuously separated. Therefore, when providing through holes in the upper electrode a plurality of through holes is provided on a straight line so that the upper electrode is not disconnected, and during the deep etching process, when carrying out the isotropic etching by only proceeding to join the enlarged openings of the electron supply layer the electron supply layer can be continuously separated in the direction that the electron supply layer crosses the upper electrode.

Even when the upper electrode is uniformly formed over a broad area on the insulator layer and the lower electrode is separated and independent, the lower electrode is separated so it is necessary that the electron supply layer be independently separated. In this case, deep etching of the electron supply layer and the bridging portion reinforced by the lower layer formed from the insulator layer material functions extremely effectively.

In order to separate elements by deep etching the electron supply layer and manufacture the bridge portion, the upper electrode is not disconnected but a plurality of through holes are provided, so the resistance of the upper electrode can increase. Therefore forming the film of the upper electrode broadly and uniformly in advance is effective to limit the increase in resistance value of the electrode.

According to the electron emitting element of the present embodiment, in the above configuration the electron supply layer is separated in a stripe-shape parallel to the lower electrode, and above the separation space a bridge structure is provided in which part of the insulator layer is arranged in a plane while connected to the adjacent electron supply layer above which the upper electrode is arranged in a plane, so the leakage current load between elements via the electron supply layer is small, and the quantity of electrons emitted from the island areas increases.

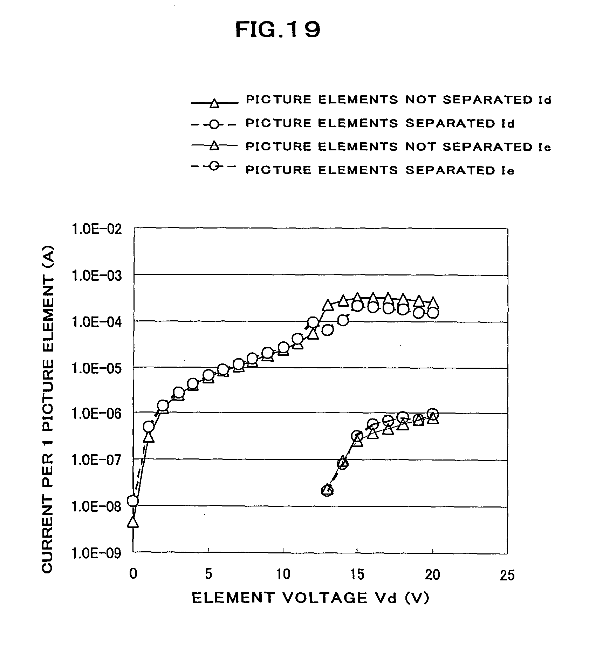

Elements in which the electron supply layer is separated and in which the electron supply layer is not separated were manufactured, and for each the element current Id {current (A) /picture element flowing when the element voltage Vd (V) is applied, and the emission current Ie emitted from the upper electrode were measured. Fig. 19 is a graph of the measured results for current-voltage characteristics, Table 1 shows the element current Id and emission current Ie for each element when the element voltage Vd = 20V.

**Table 1**

| Separation of picture elements | Yes | No |
|---|---|---|
| Id (A) | 1.6E-04 | 2.5E-04 |
| Ie (A) | 9.6E-07 | 8.1E-07 |

From these results it can be seen that for elements with separated electron supply layers, current leakage via the electron supply layer to the upper electrode of the adjacent element is prevented, so the element current Id is small. Also, the emission current Ie is increased.

Furthermore, in the electron emitting element according to the present invention, the insulator layer is a thick film apart from the island areas, so it is difficult for through holes to occur, so the manufacturing yield is improved. Also, the electron emitting element according to the present invention can be applied to high speed elements such as picture element bulb light sources, imaging elements, electron microscopes, and other sources of electron emitting, and vacuum microelectronics elements, and can also operate as planar or point shaped electron emitting diodes, and high speed switching elements.

Also, as a method of solving the problem of disconnection of the bus line at the step portion, compared with the known matrix arrangement structure method of manufacture (Japanese Patent Application Laid-open No. H11-185675), the method of manufacturing electron emitting elements according to the present invention is a very rational and convenient manufacturing method from the point that after uniformly forming the electron supply layer, the insulator layer, and the upper electrode over a wide area, adjacent electron emitting elements are separated and the bridge portions of the upper electrode are formed.

### (Other Embodiments of the Electron Emission Device)

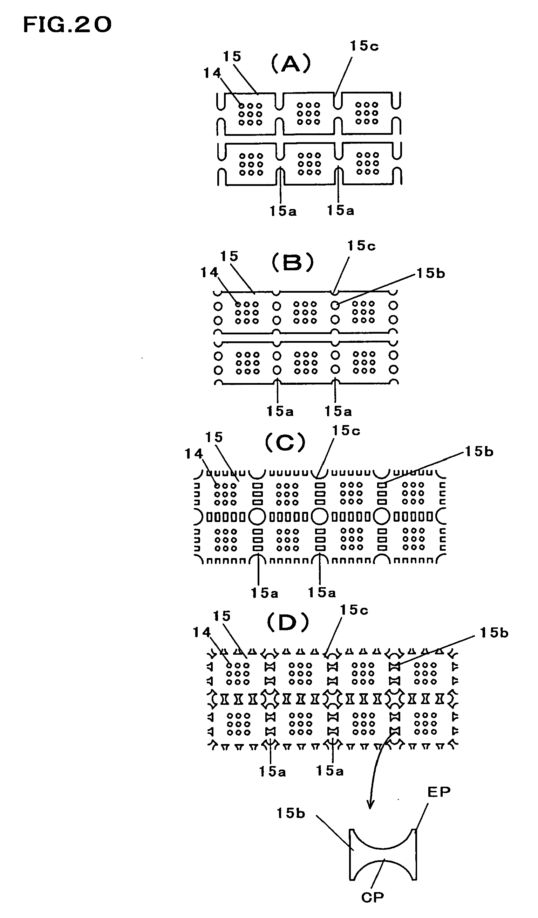

In patterning the upper electrode 15 in the embodiment shown in Fig. 4, electron emitting elements are separated by a plurality of lines of through holes 15b. In addition to this, to delineate the bridge portions and separate the electron emitting elements, a bridge portion 15a in which for example the width of the upper electrode 15 is narrowed with one or more notches 15c may be used, as shown in Fig. 20 (Fig. 20 (A)). Also a bridge portion 15a having both through holes 15b and notches 15c as shown in Fig. 20(B) may be used. Furthermore, in order that all the upper electrodes 15 be at the same voltage, through holes 15b may be provided in the x, y directions to provide bridge portions 15a in the xy directions, as shown in Fig. 20(C). The arrangement shown in Fig. 20(C) is effective for the active matrix drive format for electron emitting devices in which electrical power is supplied individually to each lower electrode. Also, besides a circular shape, the through holes 15b may be rectangular, diamond shaped, barrel shaped, star shaped, or as shown in Fig. 20(D), shoulder drum shaped having a center portion CP that is narrow and an enlarged portion EP that is broad at the edge that connects to the element, in order to maintain the area of the bridge portion 15a large and to encourage the flow of etching gas. This is effective in reducing the sheet resistance of the bridge portions.

Also, in the electron supply layer 12 shown in Fig. 11, rather than just uniformly deposit electron supply material, in order to facilitate forming the enlarged opening spaces, at locations to divide elements such as between adjacent lower electrodes 11, an etching induction layer 12e made from a material whose etching rate is higher than the electron supply layer 12 may be patterned in advance.

In any of the embodiments, in patterning the upper electrode instead of a stripe pattern, a honeycomb or delta arrangement of connection of elements or wiring that allows the upper electrode to bend or meander may be used, which has the effect that patterning in a free shape is possible without the insulator layer or the upper electrode degrading the characteristics of the element.

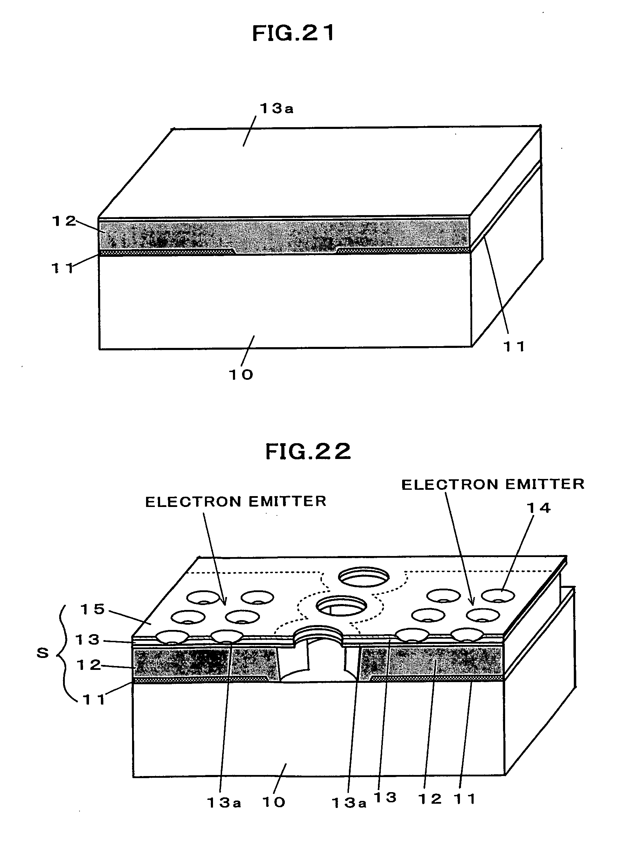

In the above embodiments, the micro masks MM are formed directly connected to the electron supply layer 12 as shown in Fig. 11, but instead as shown in Fig. 21 a preliminary insulator layer 13a can be formed in advance on the electron supply layer 12 shown in Fig. 7 by sputtering, and above the preliminary insulator layer 13a the micro masks MM are formed, and as shown in Fig. 22 the insulator layer 13 is formed over the preliminary insulator layer 13a and the micro masks MM, and above the insulator layer 13 the upper electrode 15 is formed to provide a structure in which the electron supply layer 12 is not exposed. If a preliminary insulator layer 13a is provided, its film thickness is in the range of several tens of angstroms to several thousand angstroms. In this way, short circuits between the electron supply layer 12 and the upper electrode 15 are prevented.

Furthermore, in the foregoing embodiments, the electron emitting sections have been explained as island areas, besides it is clear that the present invention may also be applied to simple surface emitting type and spindt type emission source types.

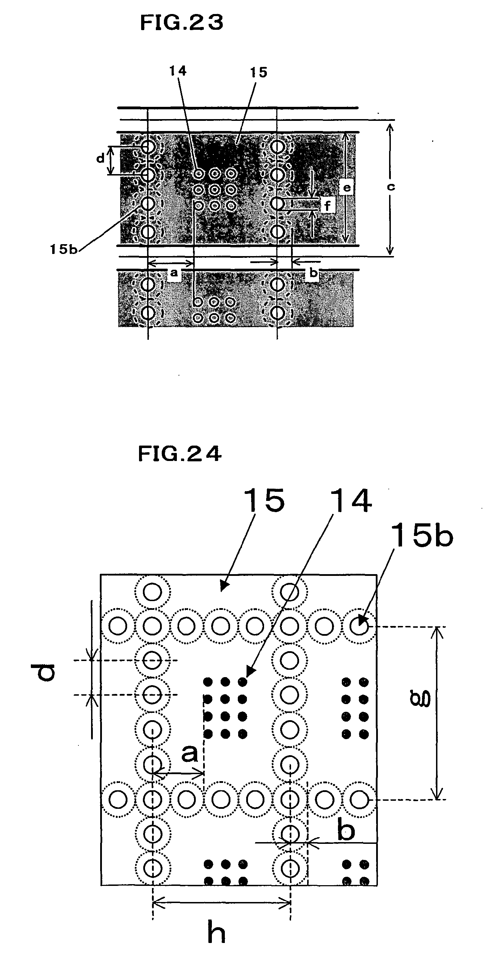

The lower electrodes and the upper electrodes connected at the bridge portion are stripe-shaped electrodes, and in the elements arranged at positions where these electrodes mutually intersect, when the conditions of the lines of circular through holes are considered in the process of forming the bridge portion by chemical dry etching, the following conditions are obtained.
1. As shown in Fig. 23, if a is the distance from the center of the through holes 15b to the edge of the adjacent island area 14 (electron emitting section) in the direction of extension of the upper electrode, and b is the distance from the center of the through holes 15b to the maximum periphery of the enlarged opening formed by isotropic etching, then a ≧ b.
2. In condition 1, if c is the pitch of the upper electrodes 15 in the direction of extension of the lower electrode, and d is the pitch of through holes 15b, then c ≧ d.
3. In condition 2, if e is the width of the upper electrode 15 in the direction of extension of the lower electrode, and f is the diameter of the through holes 15b, then f must be less than e, and taking the resistance of the upper electrode into consideration it is desirable that f ≦ 9 × e/10.
4. In the relationship in 3, d must be less than e, besides taking the resistance of the upper electrode into consideration it is desirable that d ≧ 11 × f/10.

Also, existence of the upper electrodes in the electron emitting elements is not limited to a line arrangement of row or column directions, besides the upper electrodes may extend around over and connect a plurality of electron emitting elements and spaces with bridge portions, in which lower electrodes are separated and independent for each picture element. When the conditions of the lines of circular through holes are considered in the process of forming the bridge portion by chemical dry etching, the following conditions are obtained.
1. As shown in Fig. 24, in the upper electrode, if a is the distance from the center of the through holes 15b to the edge of the adjacent island area 14 (electron emitting section), and b is the distance from the center of the through holes 15b to the periphery of the enlarged opening formed by isotropic etching, then a ≧ b.
2. In condition 1, if g is the length of a picture element in the long direction, h is the length in the short direction, and d is the pitch of the through holes 15b, then g ≧ d and h ≧ d.

### (Embodiment 1)

On a Si wafer substrate covered with a SiO₂ insulation film, a thin film made from Al-Si was formed in a stripe shape to form a foundation layer for the lower electrode.

Next, across the lower electrode without any particular patterning a 220 nm TiN lower electrode film, above which a 5000 nm thick electron supply layer made from Si were formed by the reactive sputtering method with nitrogen introduced. The TiN layer operates as the lower electrode, and at the same time prevents the Al-Si layer below the TiN layer from diffusing to the Si in the electron supply layer formed above the TiN layer.

Next, to form the island areas of the electron emitting sections on the electron supply layer obtained on the substrate, a plurality of micro masks (see Figs. 8 through 11) were created.

Next, an SiO₂ insulator layer with a film thickness in the flat area of 330 nm was formed by sputtering on the micro masks and electron supply layer. At this time the micro masks were exposed in the surface. Of course, a SiO₂ film was formed on the surface of the top the micro masks. The part where the micro masks were in direct contact with the electron supply layer and directly below the main masks, a "shadow" of the overhang of the main masks was formed, and the SiO₂ film was formed by "inward penetration" of sputtering particles, and the film thickness of the insulator layer gradually reduced towards the support portions of the micro masks.

Next, the mask of the pattern of the upper electrode was installed on the SiO₂ insulator layer, and a 60 nm thick tungsten upper electrode was formed by sputtering. As a result, the film thickness of the insulator layer and upper electrode gradually decrease towards the center of the support portions of the micro masks and the island areas were formed. At this time, the upper electrode film may be formed without surface processing of the insulator layer, besides the electrode film may also be formed after sputtering the surface of the insulator layer. By sputter etching, the surface of the insulator layer is etched and improved and the adhesion of the upper electrode to the insulator layer is improved.

Next, the adhering micro masks were removed from the substrate island areas.

Next, the resist for the matrix arrangement areas of the electron emitting elements was applied by the spin coating method on the upper electrode and the insulator layer.

Next, at the portion where space is to be provided between electron emitting elements, and arranged at fixed intervals, rows of openings were provided in the resist to expose the upper electrode.

Next, by processing with a mixed gas of CF₄, CHF₃, and Ar, using a plasma etching device isotropic etching was carried out on the tungsten upper electrodes and the SiO₂ insulator layer and through holes that exposed the electron supply layer were provided. In the side surface of the through holes projections made from the material of the insulator layer that narrowed the through holes were formed. The upper electrode and insulator layer around the through holes become the bridge portion.

Next, using a reactive ion etching device and processing using a mixed gas of CH₂F₂, SF₆, and Cl₂, anisotropic etching was carried out on the Si electron supply layer and the TiN lower electrode below the openings, and openings were provided that exposed the substrate and the Al-Si. HBr may also be used as the etchant for anisotropic etching.

Next, using a chemical dry etching device and processing with CF₄ gas, isotropic etching was carried out on the Si electron supply layer and the TiN lower electrode below the tungsten upper electrode and the SiO₂ insulator layer, and the diameter of the openings was increased. Etching of the enlarged openings of the electron supply layer and the lower electrode was carried out until adjacent enlarged openings were connected. As a result, the space below the bridge portions that separates elements was obtained. XeF₂ may also be used as the etchant for isotropic etching. XeF₂ etches tungsten, so if XeF₂ is used Al, Cr, TiNi, or similar material that is resistant to XeF₂ is used in the upper thin film electrode.

Then the resist mask that was applied to the upper electrode and the insulator layer was removed. As a result, the bridge portions that are provided above the space and that electrically connect adjacent electron emitting elements were formed.

Next, using the sputtering method with a carbon target, the carbon area (carbon layer) was formed to a film thickness of 20 nm on the upper electrode as substrate on which a plurality of depression island areas were provided.

### (Embodiment 2)

Using commonly known lithography technology and etching technology, MOSFETs (MOS field effect transistors) were created and arranged on the locations corresponding to the electron emitting elements on a Si wafer substrate. Then, an inter-layer insulation film was formed covering the part corresponding to the electron emitting elements, and above this the lower electrode was formed. At this time, penetration openings were provided in the inter-layer insulation film at the positions corresponding to each electron emitting element, and the drain electrode formed in the MOSFET and the lower electrode were made electrically conducting via these openings.

After separating and making independent the lower electrode for each electron emitting element, the electron supply layer made from Si was formed so as to cover the part corresponding to the plurality of electron emitting elements, without any particular patterning.

Next, the island areas of the electron emitting sections were formed on the electron supply layer obtained. The method of forming the island areas is the same as for embodiment 1.

Then, using a plasma etching device, etching of the upper electrode and the insulator layer was carried out in the same way as for embodiment 1. At this time, the shape of the upper electrode was the shape shown in Fig. 20(C), so that all the upper electrodes will be at the same voltage.

Next, using a reactive ion etching device and a chemical dry etching device, etching of the electron supply layer was carried out in the same way as for embodiment 1. At this time, the electron supply layer became separated and independent for each electron emitting element, the same as for the lower electrode.

Then the resist mask applied to the upper electrode and the insulator layer was removed. As a result, the bridge portions provided above the space that electrically connect the adjacent electron emitting elements were formed.

Next, using the sputtering method with a carbon target, the carbon area (carbon layer) was formed to a film thickness of 20 nm on the upper electrode as substrate on which a plurality of depression island areas were provided.

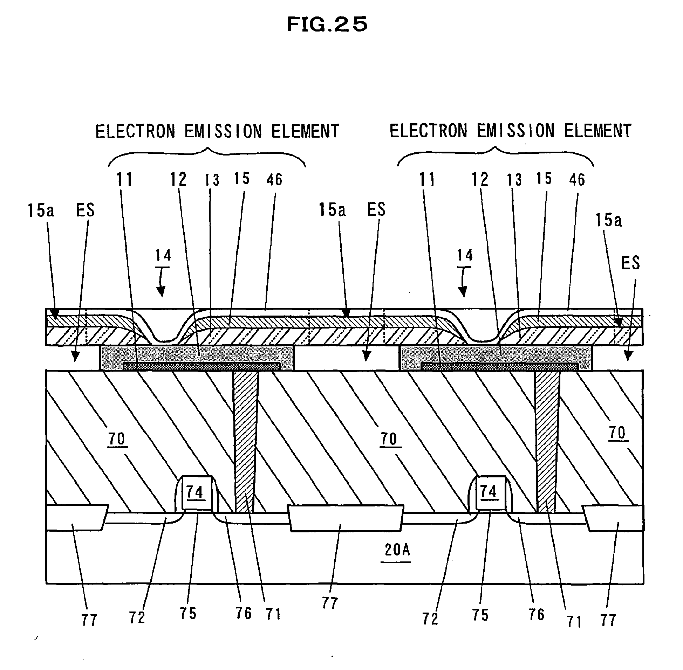

Fig. 25 is a cross-sectional view of an element formed on a single crystal silicon substrate 20A in the manufactured electron emitting device. A plurality of MOSFETs are formed on the single crystal silicon substrate 20A. In the MOSFETs, a plurality of element separation films 77 is formed in the single crystal silicon 20A, between the element separation films 77 a plurality of gate insulation films 74 and a plurality of gate electrodes 75 made frompolysilicon are formed on the single crystal silicon substrate 20A. Also, as a mask for the gate electrodes 75 and the element separation films 77, impurities were introduced into the crystal substrate 20A and activated, to form a plurality of self-aligning source electrodes 72 and drain electrodes 76. The lower electrode 11 is electrically connected to the drain electrode 76 via tungsten or other metals within a contact hole 71 penetrating the inter-layer insulation film 70. For each lower electrode 11 an electron emitting element is formed as separate and independent. Above the lower electrode 11, the electron supply layer 12, the insulator layer 13, and the upper electrode 15 are formed in that order, and island area 14 electron emitting sections are formed as depressions. The method of forming the island areas was the same as in embodiment 1. Electron emission elements were separated by the enlarged opening space ES removed by etching the electron supply layer 12 between electron emitting elements . The electron supply layer 12 is separated and independent for each electron emitting element, the same as for the lower electrode 11, and the bridge portions 15a of the upper electrode 15 are provided over the space and connect adjacent electron emitting elements electrically. The carbon area (carbon layer) is formed on the upper electrode 15 of the island areas 14 electron emitting sections.

Also, the electron emitting device and manufacturing method according to the present invention are not limited to electron emitting devices including MOSFETs as transistors, but they can also be applied to electron emitting devices that include transistors with a bipolar structure, bottom-gate structure TFTs (thin film transistors), or top structure TFTs.

### (Imaging Element using the Electron Emission Device)

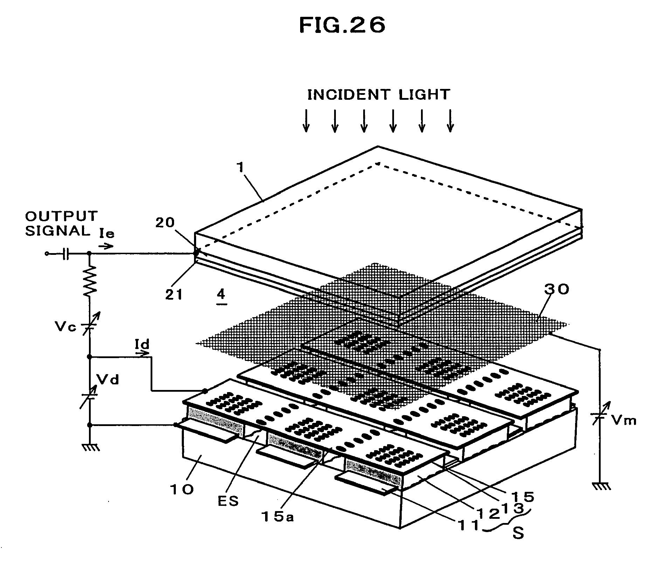

As shown in Fig. 26, the imaging element includes an element substrate 10 provided with a plurality of electron emitting elements S as back substrate (the electron emitting device referred to above), and a front substrate 1 including transparent glass as light receiver for receiving light from the object whose image is to be taken. The electron emitting device and front substrate 1 are maintained approximately parallel and sandwich a vacuum space 4. The front substrate 1 and the back substrate 10 are supported by spacers not shown in the drawings that separate out the vacuum space 4.

The vacuum space inner surface of the front substrate 1 that is in opposition to the back substrate 10 and that sandwiches the vacuum space 4 includes a transparent electrode 20 made from Sn02 or In, and a photoelectric conversion film 21 in contact with the transparent electrode on the opposite side to the front substrate, made from for example Se-As-Te, Sb₂S₃, PbO, or CdSe. The front substrate also includes a signal electrode for taking out the imaging output signal from the transparent electrode. A high voltage is applied to the photoelectric conversion film 21 on the inside surface of the front substrate 1 which is the light receiving surface.

A plurality of lower electrodes 11 are formed extending in parallel on the inside surface of the back substrate 10 towards the vacuum space 4 side. On top of the common lower electrodes a plurality of electron emitting elements S are arranged along the lower electrodes 11. The electron supply layer is spatially separated in a stripe shape along the lower electrodes. A plurality of upper electrodes 15 extending mutually in parallel are connected by bridge portions extending normal to the lower electrodes 11, and connecting the upper electrodes 15 electrically. The insulator layer and upper electrodes are connected above the adjacent electron supply layers. The intersection points of the lower electrodes and the upper electrodes connected by the bridge portions correspond to the electron emitting elements.

Furthermore, as shown in Fig. 26, the imaging element includes a mesh electrode 30 in the vacuum space 4, and by applying an intermediate voltage Vm the directionality of the electron beam and the resolution can be improved.

When the imaging device is operated, an optical image is projected onto the photoelectric conversion film 21 through the front substrate 1 using an optical system, the optical image is converted into a positive two-dimensional electrical charge image, and electrical charge accumulates on the scan side surface of the photoelectric conversion film 21. On the other hand, current flows due to electrons emitted from the electron emitting elements formed on the back substrate to neutralize the electrical charge, and this current can be measured as an image signal.

The upper electrodes 15 are connected to for example a pulse generation circuit (not shown in the drawings) for scanning in the vertical direction, and a predetermined signal is applied to each. The lower electrodes 11 are connected to for example a pulse generation circuit (not shown in the drawings) for scanning in the horizontal direction, and a predetermined signal is applied to each synchronized with the vertical direction scanning pulse. The intersection points of the lower electrodes 11 and upper electrodes 15 correspond to locations of the electron emitting elements S, so in the imaging element of the embodiment the electron emitting elements S are successively activated by the lower electrodes and the upper electrodes 15 , so the adjacent area of the photoelectric conversion film is scanned, and a photoelectrically converted image signal is obtained from the image formed on the photoelectric conversion film.

### (Display Device using the Electron Emission Device)

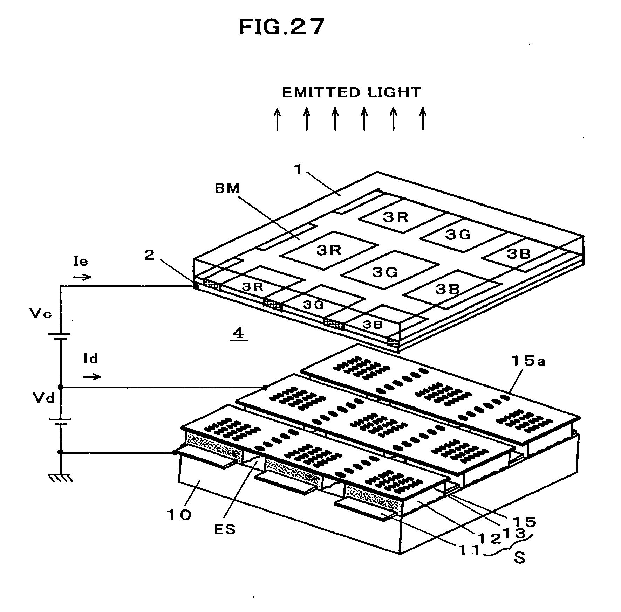

Fig. 27 shows a flat panel display device that applies the electron emitting element according to the embodiments.

An element substrate 10 provided with electron emitting elements S as back substrate and a transparent substrate in opposition to the back substrate made of glass or the like as front substrate, enclose and maintain a vacuum space 4. On the inner surface of the front substrate 1 fluorescent layers 3R, 3G, 3B that emit red, green, and blue colored light respectively are provided in the portions partitioned by black matrix BM made from carbon or similar, and a conducting layer made of A1 or similar may also be provided as a collector electrode 2 layer on the inner surface. An image display array including a plurality of light emitters corresponding to the fluorescent layers 3R, 3G, 3B, is delimited by the dark-colored or black-colored matrix layer BM, and it can also be delimited in the same way by a dark or black striped layer.

In the electron emitting element the upper electrode 15 on the surface is at a positive voltage Vd and the lower electrode 11 on the rear surface is at the ground voltage. When the voltage Vd applied between the lower electrode 11 and the upper electrode 15 is for example 20V and electrons flow into the electron supply layer 12, part of the electrons are emitted into the vacuum via the electron emitting sections formed in advance by a conducting process. Electrons are emitted from the bottom of the island areas 14 with a predetermined angle of dispersion. However, in the element structure of Fig. 5, the electrical field in the space in the top of the island areas 14 is in the shape of a lens, so the emitted electrons are changed onto a path in the normal direction. As a result, emitted electrons with an extremely small angle of dispersion are obtained.

The electrons e (emission current Ie) emitted from the depressions of the island areas 14, are accelerated by a high acceleration voltage Vc, for example about 5kV, applied to the opposing collector electrode 2 and collected on the collector electrode 2, and the fluorescent material 3 emits the corresponding visible light. The drive method of the display device of the present embodiment is the passivematrixmethod, besides the active matrix method in which electron emitting elements S are separately driven using upper electrodes 15 as shown in Fig. 20(C) and Fig. 20(D) can also be applied.

## Claims

1. An electron emitting device having a lower electrode on a side near to a substrate and an upper electrode on a side remote from the substrate respectively, formed of a plurality of electron emitting elements emitting electrons from a side of the upper electrode, wherein space is formed between the electron emitting elements, and the upper electrode extends across the plurality of electron emitting elements and the space by a bridging portion of the upper electrode.

2. The electron emitting device according to claim 1, wherein the bridge portion is provided with at least one through hole or notched portion.

3. The electron emitting device according to claim 2, wherein the through hole or notched portion is circular-shaped, rectangular-shaped, diamond-shaped, barrel-shaped, star-shaped, shoulder drum shaped, or a shape formed of part of these shapes.

4. The electron emitting device according to any of claims 1 to 3, wherein the bridge portion extends approximately parallel to the substrate.

5. The electron emitting device according to any of claims 1 to 4, wherein the lower electrodes and the upper electrodes connected at the bridge portions are stripe shaped electrodes arranged in positions that are mutually orthogonal.

6. The electron emitting device according to any of claims 1 to 4, wherein the upper electrode extends over a plurality of electron emitting elements and spaces by the bridge portions without the electron emitting elements being limited to the row or column directions, and the lower electrode is separated and independent for each electron emitting element.

7. The electron emitting device according to claim 5 or claim 6, wherein the electron emitting elements further comprise an insulator layer and an electron supply layer made from a semiconductor deposited between the lower electrode and the upper electrode, and when a voltage is applied between the lower electrode and the upper electrode electrons are emitted from the upper electrode.

8. The electron emitting device according to claim 7, wherein the bridge portion comprises the material of the insulator layer that is integral with the insulator layer of the electron emitting element.

9. The electron emitting device according to any of claims 1 to 8, wherein the electron supply layer is made from an amorphous phase that comprises silicon or a mixture or compound whose main component is silicon.

10. The electron emitting device according to any of claims 1 to 9, further comprising at least one electron emitting section formed from an island area in which the film thickness of the insulator layer and the upper electrode gradually decrease towards the electron supply layer.

11. The electron emitting device according to claim 10, wherein in the island areas the upper electrode terminates on the insulator layer.

12. The electron emitting device according to claim 10 or claim 11, wherein in the island areas the insulator layer terminates on the electron supply layer.

13. The electron emitting device according to any of claims 10 to 12, wherein the island areas are depressions in the flat surface of the upper electrode.

14. The electron emitting device according to any of claims 10 to 13, wherein the insulator layer is made from dielectric material, and a part other than the island areas has a film thickness of 50 nm or greater.

15. The electron emitting device according to any of claims 10 to 14, wherein electrically insulating masks are provided in the island areas.

16. The electron emitting device according to any of claims 10 to 15, wherein a carbon area comprising carbon, or a mixture with carbon as a component, or a carbon compound is provided in the top, bottom, or middle of the island areas.

17. A method of manufacturing an electron emitting device having a lower electrode on a side near to a substrate and an upper electrode on a side remote from the substrate respectively, formed of a plurality of electron emitting elements emitting electrons from a side of the upper electrode, with space being formed between the electron emitting elements, and the upper electrode being extending across the plurality of electron emitting elements and the space by a bridging portion of the upper electrode, the method comprising:
an electron emitting section forming step of forming a laminated body on which an upper electrode material layer is deposited to form a plurality of electron emitting elements on a substrate; a bridge forming step of forming a plurality of bridge portions provided with at least one through hole or notch along a line that separates the plurality of electron emitting elements by etching the upper electrode material layer;
a cutting step of etching part of the exposed insulator layer to or near to the substrate and lower electrode by anisotropic etching using the bridge portions as a mask; and
a separating step of separating the exposed part of the insulator layer into the plurality of electron emitting elements by isotropic etching to enlarge the space using the bridge portions as a mask.

18. The method of manufacturing an electron emitting element according to claim 17, wherein in the cutting step mixed gas comprising CH₂F₂, SF₆, Cl₂ is brought into contact with the exposed part of the insulator layer.

19. The method of manufacturing an electron emitting element according to claim 17 or 18, wherein in the separating step mixed gas comprising CF₄ is brought into contact with the exposed part of the insulator layer.

20. The method of manufacturing an electron emitting element according to any of claims 17 to 19, wherein the electron emitting section forming step comprises:
an electron supply layer forming step of forming an electron supply layer consisting of silicon or a mixture whose main component is silicon or a silicon compound on the substrate;
a mask forming step of forming a mask on the electron supply layer that forms a canopy around the portion in contact with the electron supply layer;
an insulator layer forming step of forming an insulator layer formed from a thin film of insulation material by depositing insulation material on the electron supply layer and the mask, so that around the part in contact with the mask the film thickness of the insulator layer gradually decreases to form at least one island area; and
an upper electrode forming step of forming a film of the upper electrode on the insulator layer to form the island area as an electron emitting section.

21. The method of manufacturing according to claim 20 , further comprising a carbon area forming step of forming a carbon area comprising carbon or a mixture with carbon as a component or a carbon compound in the top, bottom, or middle of the island areas.

22. The electron emitting device according to claim 20 or claim 21, wherein in the bridge forming step the upper electrode and the insulator layer are etched by the isotropic etching method to form bridge portions including the material part of the insulator layer integral with the insulator layers and upper electrodes of adjacent electron emitting elements, and a canopy-shaped structure made from the material of the insulator layer is formed in the through holes projecting towards the center of the through holes.

23. The method of manufacturing according to any of claims 20 to 22, wherein the masks are micro masks comprising a support portion that projects in a direction normal to the substrate and a main mask that projects in a direction parallel to the substrate from the support portion, and the mask forming step comprises the steps of:
forming a support portion material layer and a main mask material layer on the substrate;
forming a resist mask thereon by photolithography so that at least part of the electron supply layer is exposed; and
etching the main mask and the support portion in that order by the dry etching method and the wet etching method to form the micro masks.

24. An imaging element, comprising:
an electron emitting device according to any of claims 1 to 16; a photoelectric conversion film approximately parallel to and
in opposition to the upper electrode and enclosing a vacuum space; an optically transparent electrically conducting film deposited on the photoelectric conversion film; and
an optically transparent front substrate that supports the
photoelectric conversion film and the optically transparent
electrically conducting film.

25. The imaging element according to claim 24, further comprising a mesh electrode arranged within the vacuum so as not to contact the electron emitting device or the photoelectric conversion film.

26. A display device comprising:
an electron emitting device according to any of claims 1 to 16; and
an optically transparent front substrate in opposition to the upper electrode and enclosing a vacuum space, with a fluorescent layer arranged on the surface on the side of the vacuum space, and a collector electrode formed on the fluorescent layer and
in opposition to the upper electrode.

27. The display device according to claim 26, having an image display array comprising a plurality of light emitters corresponding to the fluorescent layer.

28. The display device according to claim 26 or claim 27 , wherein the image display array comprising a plurality of light emitters corresponding to the fluorescent layer is delimited by a dark-colored or black colored matrix layer or striped layer.
